# EUROPEAN PATENT APPLICATION

(11) **EP 2 522 871 A1**
(43) Date of publication of application: **14.11.2012**
(21) Application number: 11305558.6
(22) Date of filing: 10.05.2011
(51) Int. Cl.: F16D 23/14, F16C 33/76

(54) **A ball bearing, a clutch thrust bearing device including such a bearing and a motor vehicle fitted with such a bearing or such a device**

(71) Applicant: Aktiebolaget SKF, 41 550 Göteborg (SE)
(72) Inventor: Arnault, Benoit, 37540, Saint Cyr sur Loire (FR); Chollet, Mickaël, 37300 Joue-les-Tours (FR)
(74) Representative: Myon, Gérard Jean-Pierre

(57) **Abstract**

This ball bearing for transmitting an axial force comprises an inner ring (3), an outer ring, balls (6) disposed in a raceway chamber (5) formed between the inner and outer rings and a sealing gasket (10), mounted on a first ring selected from the inner and outer rings. This sealing gasket (10) comprises a wiper lip (106) in sliding contact with a surface (324) of the second ring (3), this wiper lip having a globally frustroconical shape centered on an axis of symmetry of the first ring. In this ball bearing, the inner and outer rings are mounted with freedom to pivot angularly (A1) about a point common to the axes of symmetry of the two rings. The sealing gasket has at least one auxiliary lip (108) extending from the wiper lip and coming in sliding contact with the surface (324) of the second ring.

A clutch thrust bearing device according to the invention comprises a drive element and a bearing as mentioned here-above.

## Description

### TECHNICAL FIELD OF THE INVENTION

This invention relates to a ball bearing and to a clutch thrust bearing device including such a bearing. The invention also relates to a motor vehicle fitted with such a bearing or such a device.

### BACKGROUND OF THE INVENTION

Ball bearings are sometimes used for transmitting an axial force, i.e. a force parallel to the central axis of the bearing. This applies, in particular, to clutch thrust bearing devices used in motor vehicles.

In a clutch thrust bearing device, it can happen that the axis of the diaphragm clutch mechanism is not accurately in alignment with the axis of the outlet shaft of a gearbox. This can lead to high levels of stress on certain component parts of a clutch thrust bearing, to the extent that it limits the lifetime of that type of equipment. Alignment is lost between the above-mentioned axes when they intersect or when they no longer coincide, even while remaining parallel.

WO-A-2010/125027 discloses a ball bearing and a clutch thrust bearing device where the inner and outer rings of the bearing are mounted with freedom to pivot angularly about a point which is common to the axes of symmetry of the two rings of the bearing. This accommodates a non-alignment of the axis of the diaphragm clutch mechanism and the outlet shaft of the gearbox, as mentioned here-above. The angular pivoting movement of the inner and outer ring one with respect to the other induces that an outer surface of the inner ring is partly located inside a raceway chamber of the bearing and partly outside of this chamber, this chamber being separated from its environment via a sealing gasket. Some abrasive particles can accumulate on the part of this outer surface which lies outside the raceway chamber. Thus, when the angular pivoting movement of the inner and outer rings results in a part of this surface moving towards the inside of the raceway chamber, these particles might not be efficiently cleaned away by a wiper lip of the sealing gasket. Moreover, these particles might abrade the wiper lip.

The same kind of drawbacks occurs with other types of ball bearings where an angular pivoting movement of the inner and outer rings can occur.

### SUMMARY OF THE INVENTION

This invention aims at solving these problems with a new bearing where the inner and outer rings are mounted with freedom to pivot angularly with respect to each other and where the risks of polluting a raceway chamber or abrading a sealing lip are substantially reduced.

To this end, the invention relates to a ball bearing for transmitting an axial force, this bearing comprising an inner ring, an outer ring, balls disposed in a raceway chamber formed between the inner and outer rings and a sealing gasket, mounted on a first ring selected from the inner and outer rings, and comprising a wiper lip in sliding contact with a surface of the second ring, this wiper lip having a globally frustroconical shape centered on an axis of symmetry of the first ring. In this ball bearing, the inner and outer rings are mounted with freedom to pivot angularly about a point common to the axes of symmetry of the two rings. According to the invention, the sealing gasket has at least one auxiliary lip extending from the wiper lip and coming in sliding contact with the above-mentioned surface of the second ring.

Thanks to the invention, the surface of the second ring can be cleaned by the auxiliary lip when this surface is moved in a direction towards the raceway chamber. Thus, the auxiliary lip helps the wiper lip to fulfill its sealing function and avoids abrasion of this wiper lip by dust or particles present on the surface of the second ring.

According to further aspects of the invention that are advantageous but not compulsory, such a bearing may incorporate one or more of the following features, taken in any technically feasible combination:
- The wiper lip has an inner radial face and an outer radial face, this inner radial face being oriented towards the surface of the second ring and the auxiliary lip extends from this inner radial face of the wiper lip, towards the surface of the second ring.
- In a cross section plane including the central axes of the rings, the wiper lip extends, from a main part of the sealing gasket, along a first direction which converges towards the rotation axes and the balls, whereas the auxiliary lip extends, from the wiper lip, along a second direction which converges towards the rotation axes opposite the balls.
- The auxiliary lip has an inner radial face and an outer radial face and these faces converge opposite the wiper lip.
- The auxiliary lip is integral with the wiper lip. Alternatively, the auxiliary lip and the wiper lip are made of two different elastomeric materials.
- The gasket has a core member mounted on the first ring and an elastomeric body mounted on the core member and forming the wiper lip. In such a case, the wiper lip and the auxiliary lip are advantageously made by parts of the elastomeric body.
- The sealing gasket has one auxiliary lip. Alternatively, the sealing gasket has at least two auxiliary lips which extend from the wiper lip along parallel directions.
- The ball bearing comprises a shield mounted on one of the rings, this shield having an end portion forming, with a corresponding surface of the other one of the rings, a gap of substantially constant width during angular pivoting movement of the inner and outer rings relative to each other. This shield and the sealing gasket are advantageously located on opposite sides of the raceway chamber.

The invention also provides a clutch thrust bearing device that comprises a drive element and a bearing as mentioned here-above. This clutch thrust bearing device has a good axial compactness, insofar as it has an efficient sealing function, without needing more space than a normal clutch thrust bearing device. Moreover, this device is simple to implement and to mount. Finally, its lifetime is increased with respect to known devices.

Advantageously, the sealing gasket is mounted on a side of the bearing which is opposite, with respect to the raceway chamber, to a part of the clutch thrust bearing device which is configured to push on a diaphragm clutch mechanism.

Finally, the invention provides a motor vehicle fitted with a bearing or a clutch thrust bearing device as mentioned here-above. Such a vehicle is less expensive and easier to maintain than prior art vehicles.

### BRIEF DESCRIPTION OF THE DRAWINGS

The invention can be well understood and other advantages thereof appear more clearly in the light of the following description of two embodiments of a bearing and clutch thrust bearing device in accordance with the principle of the invention, given purely by way of example and made with reference to the accompanying drawings in which:
- figure 1 is an axial section of a bearing in accordance with the invention, in a first utilization configuration
- figure 2 is a section analogous to figure 1, with the bearing in a second utilization configuration
- figure 3 is a view on a larger scale showing detail III on figure 1
- figure 4 is a view on a still larger scale showing detail IV on figure 3
- figure 5 is a view on a larger scale showing detail V on figure 2
- figure 6 is a view on a still larger scale showing detail VI on figure 5 and
- figure 7 is a detailed view similar to figure 4 for a bearing and a clutch thrust bearing device according to a second embodiment of the invention.

### DESCRIPTION OF SOME EMBODIMENTS

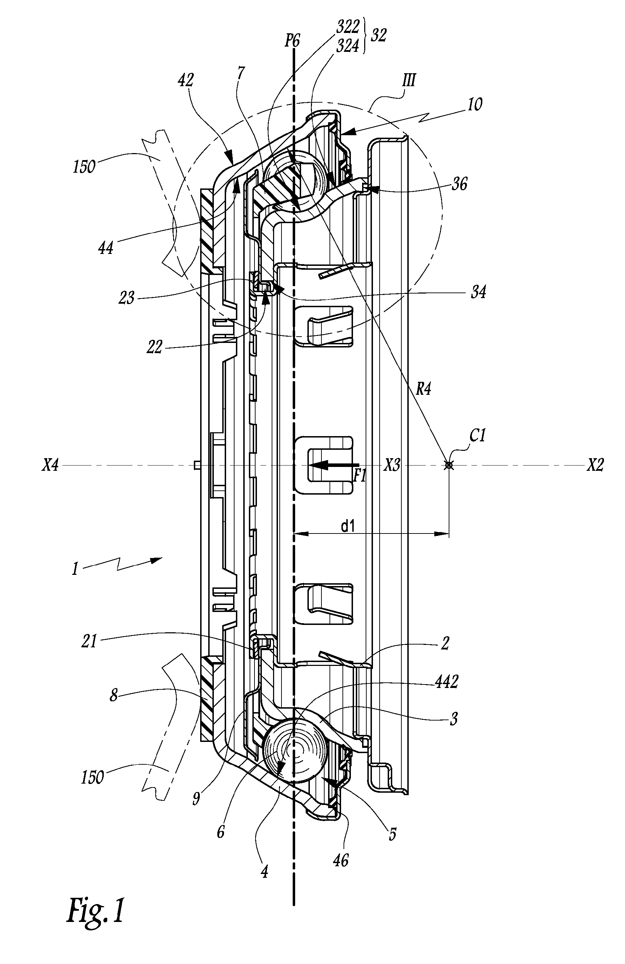

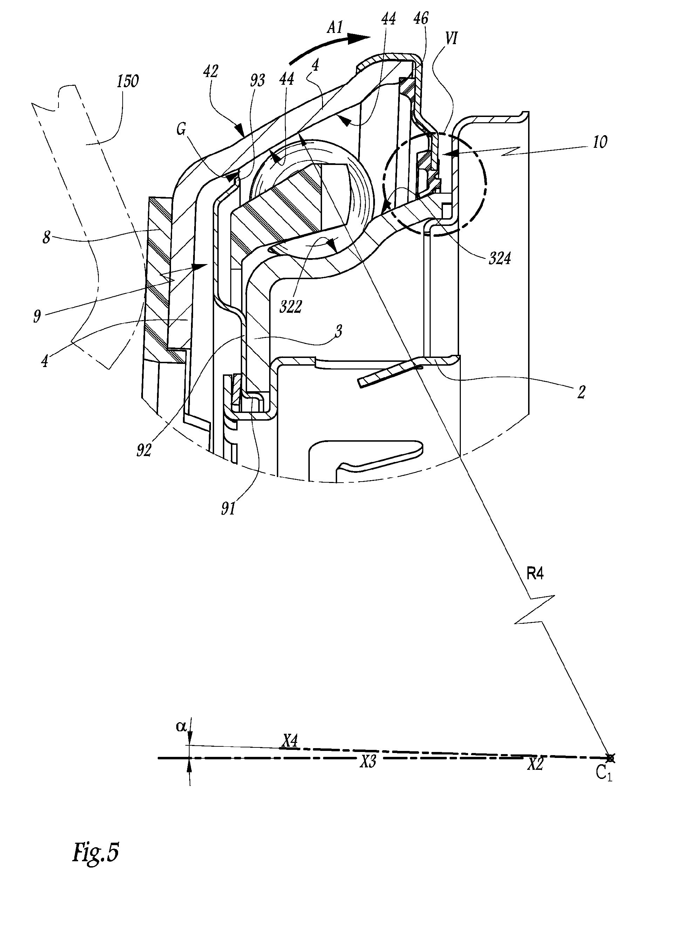

The bearing 1 shown on figures 1 to 6 belongs to a clutch thrust bearing device for a non-represented motor vehicle. The bearing 1 is associated with a metal sleeve 2 for fastening on a piston connected to the output shaft of a gearbox. Bearing 1 and sleeve form together a clutch thrust device. Metal sleeve 2 is centered on an inlet axis X2 of bearing 1. Bearing 1 comprises an inner or inside ring 3 and an outer or outside ring 4. A raceway chamber 5 is defined radially between rings 3 and 4 and receives a single series of balls 6 that are held in relative position by a cage 7 which is also located in chamber 5. Items 3, 4 and 6 are metallic, whereas cage 7 is made of a synthetic material.

The center plane of the balls 6, that is the plane that contains the respective centers of these balls, is referenced P6.

Outer ring 4 is equipped with a contact pad 8 made of a synthetic material. Contact pad 8 is annular and lies against the outside surface 42 of outer ring 4 which is opposite to chamber 5. Contact pad 8 is fixedly mounted onto outer ring 4. Contact pad 8 is in contact with a diaphragm 150 of a non-represented clutch mechanism, which belongs to the automotive vehicle. This diaphragm 150 is partly represented on the figures by its tips which are drawn in chain-dotted lines and form part of a conventional throughout mechanism.

Sleeve 2 enables a thrust force F1 to be exerted in alignment along axis X2.

The axes of symmetry of rings 3 and 4 are respectively referenced X3 and X4. Axis X4 constitutes the outlet axis of bearing 1. In the nominal utilization configuration of bearing 1, as shown on figures 1, 3 and 4, axes X2, X3 and X4 coincide.

Balls 6 simultaneously bear against an outside surface 32 of inner ring 3 and against an inside surface 44 of ring 4. More precisely, surface 32 defines a groove 322 with a generator line in the form of a circular arc of a radius substantially equal to the radius of the balls 6. Thus, the balls 6 are positioned axially relative to axis X3 and plane P6 is perpendicular to axis X3.

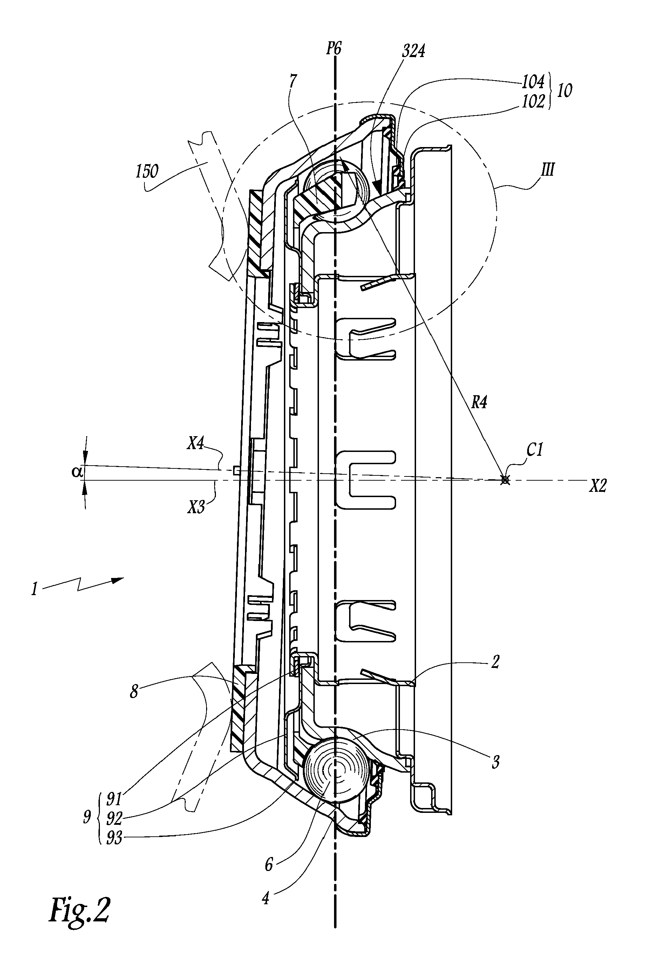

Given the complexity of the clutch mechanism manufacturing tolerances, and the wear of the members that interact with the clutch thrust bearing formed by bearing 1, it may happen that axes X3 and X4 form a non-zero angle α, as shown in the configuration of figures 2, 5 and 6. Assuming that axes X2 and X3 remain in alignment, bearing 1 accommodates an alignment defect between inlet axis X2, along which thrust force F1 is exerted on sleeve 2, and axis X4 of ring 4, in the position occupied by this ring as a result of its interaction with diaphragm 150.

In other words, outer ring 4 can have, with respect to inner ring 3, an angular pivoting movement about a point C1 that is common to axes X3 and X4 and that constitutes the center of rotation of ring 4 about ring 3, in a pivoting movement which is sometimes called "swiveling" movement.

The position of point C1 along axes X3 and X4 is defined by the geometry of balls 6, groove 322 and surface 44. In the assembled configuration of bearing 1, point C1 is offset along axes X3 and X4 relative to the series of balls 6. The axial distance d1 measured between points C1 and plane P6 along axis X3 is non-zero. The fact that point C1 is offset axially along axes X3 and X4 relative to plane P6 enables bearing 1 to take off axial forces, in particular the resisting force exerted by diaphragm 150 on contact pad 8 and outer ring 4.

In order to enable the swiveling movement of rings 3 and 4 to take place, surface 44 of ring 4 forms a pivot track 442 along which balls 6 can rotate in the plane of the figures, as a function of the relative position of axes X3 and X4. Pivot track 442 is in the form of a truncated sphere centered on point C1 and the radius of this track, i.e. the distance between point C1 and track 442, is written R4.

Sleeve 2 is provided with tabs 21 that define an outer zone 22 for receiving the inner radial edge face 34 of ring 3, with radial clearance, so that edge face 34 can slide radially in zone 22, thereby enabling the relative radial position of rings 2 and 3 to be adjusted with respect to axis X2. This makes it possible to accommodate a non-alignment of axes X2 and X3 when they are parallel but do not coincide.

A shield 9, formed by folding a sheet metal blank, is fasten to edge face 34 and comprises an inner portion 91 of a cylindrical shape with a circular section of an outside diameter that is slightly greater than the inside diameter of edge face 34. Thus, shield 9 is suitable for snap-fastening resiliently on edge face 34. Inner portion 91 is received within zone 22, together with an elastically deformable washer 23, which brakes the radial relative movements of items 2, 3 and 9.

Shield 9 also has an intermediate portion 92 that extends radially outwardly with respect to inner portion 91, up to an outer radial edge 93 which faces inside surface 44 of ring 4. A gap G is formed between edge 93 and surface 44. This gap G is narrow in order to limit, as much as possible, the pollution of chamber 5 by dust or impurities coming from beside the vehicle clutch. In practice, the width W of gap G, as measured perpendicularly to surface 44, lies in the range 0,1 mm to 1 mm for a bearing 1 having a radius R4 lying in the range 5 mm to 50 mm..

324 denotes the part of outside surface 32 defined between groove 322 and the outer edge 36 of inner ring 3.

A sealing gasket 10 is mounted on outer ring 4, next to its outer edge 46, and comprises a metallic core 102 and an elastomeric body 104 mounted on core 102 and which comprises a wiper lip 106 of a generally frustroconical shape.

In the plane of figures 1, 3 and 4, lip 106 extends along a direction D6 which converges towards axes X2, X3 and X4 in the direction of balls 6. Actually, wiper lip 106 is frustroconical, centered on axis X4, and protrudes out of a main part 107 of elastomeric portion 104 in the direction D6.

Wiper lip 106 is in sliding contact with surface 324 and is defined between an inner radial surface 1062 and an outer radial surface 1064. Inner surface 1062 faces surface 324 and lies against this surface by an edge 1066 defined between this surface and an end face 1068 of wiper lip 106.

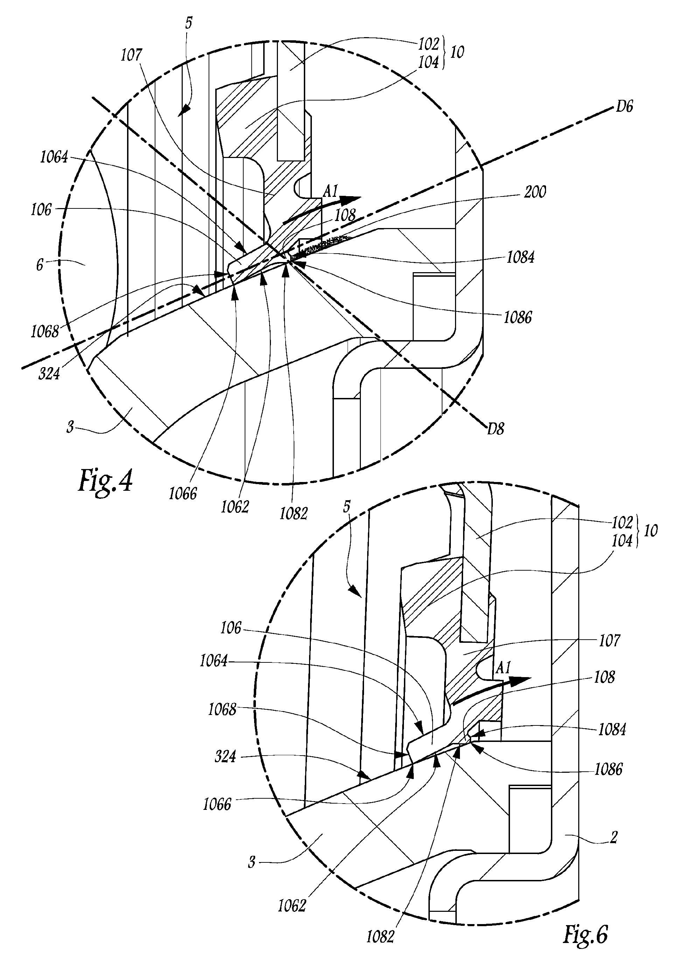

When bearing 1 is in the configuration of figures 1, 3 and 4, some dust might accumulate on the part of surface 324 which lies outside of chamber 5, as represented by the particles 200 visible on figure 4 only.

According to the invention, wiper lip 106 is provided with an auxiliary lip 108 which extends towards surface 324, along a direction D8 which, in the plane of figures 1 to 6 converges towards axes X2, X3 and X4 opposite to balls 6. Auxiliary lip 108 is defined between an inner radial surface 1082 and an outer radial surface 1084 which converge towards the tip 1086 of lip 108. Auxiliary lip is substantially frustroconical and oriented so that it converges away from wiper lip 106.

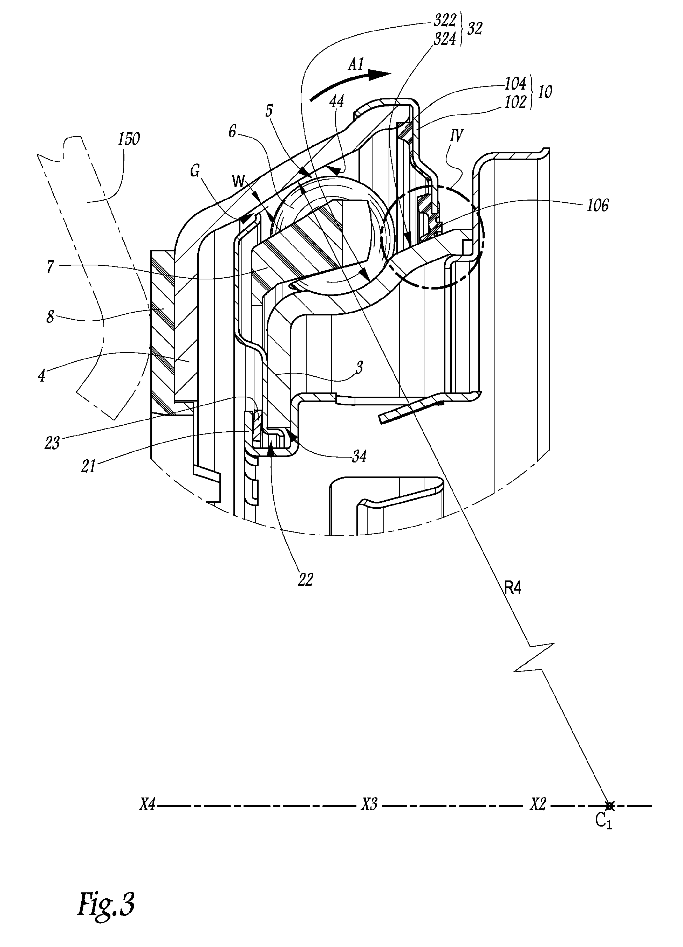

When bearing 1 is moved from the configuration of figure 1 to the configuration of figure 2, that is when outer ring 4 has a pivoting angular movement in the direction of arrow A1 on figures 3 to 6, along a pivoting route circular and centered on point C1, auxiliary lip 108 scrapes surface 324. This scraping operation pushes particles 200 away, thus avoiding a direct interaction between these particles and wiper lip 106. Thanks to the action of auxiliary lip 108, particles 200 do not risk to enter raceway chamber 5 or to damage by abrasion the active edge 1066 of wiper lip 106.

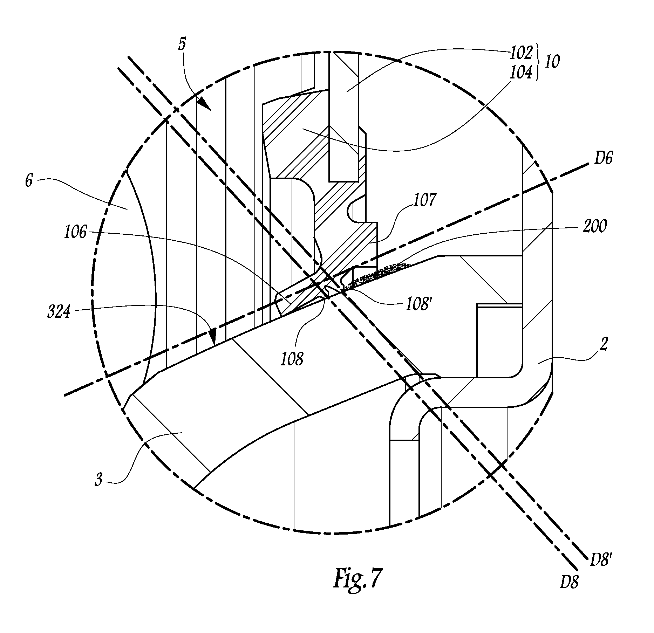

In the second embodiment of the invention represented on figure 7, the same elements as in the first embodiment have the same references. In this embodiment, the elastomeric body 104 of a sealing gasket 10 is mounted on a metallic core 102 and its main part 107 extends via a wiper lip 106 and two auxiliary lips 108 and 108'. Wiper lip 106 extends along a direction D6 which is substantially the same as in the first embodiment, whereas auxiliary lips 108 and 108' extend along two parallel directions D8 and D8' which converge towards the central axes of the inner and outer rings 3 and 4 opposite the balls 6 received in the raceway chamber 5 of the ball bearing.

In the two embodiments described here-above, shield 9 and gasket 10 are located on opposite sides of chamber 5, in particular on opposite sides of plane P6. Shield 9 has a sealing function on the diaphragm side and gasket 10 has a sealing function on the gearbox side. Gasket 10 is opposite to pad 8 with respect to chamber 5 and plane P6.

In the two embodiments represented on the figures, the auxiliary lip or lips is or are integral with the wiper lip. Alternatively, the auxiliary lip or lips can be made of material which is different from the wiper lip, e.g. overmolded on the main part 107 of the elastomeric body 104.

In the two embodiments represented on the figures, the sealing gasket 10 is fast with the outer ring 4 and slides on the inner ring 3. A reverse configuration is possible, where the sealing gasket is mounted on the inner ring 3 and slides on the outer ring.

The sealing gasket can be mounted on the fixed ring or on the rotating ring of a ball bearing according to the invention.

In the embodiment represented on the figures, the sealing gasket is on the back of the ball bearing 1, that is on its side opposite to pad 8 and diaphragm 150. Alternatively, the sealing gasket can be mounted on the front side of the clutch thrust bearing device formed by bearing 1 and sleeve 2.

Whatever the embodiment under consideration, a clutch thrust bearing device comprising a bearing 1 and a sleeve 2 as described here-above accommodates a misalignment between its input axis and its output axis while keeping the raceway chamber efficiently isolated from its environment thanks to the action of the auxiliary lip or lips and the wiper lip.

According to a non-represented alternative embodiment, the wiper lip can be provided with more than two auxiliary lips.

## Claims

1. A ball bearing (1) for transmitting an axial force (F1), the bearing comprising:
- an inner ring (3),
- an outer ring (4),
- balls (6) disposed in a raceway chamber (5) formed between said inner and outer ring
- a sealing gasket (10) mounted on a first ring (4) selected from the inner and outer rings and comprising a wiper lip (106) in sliding contact with a surface (324) of the second ring, said lip being centered on an axis of symmetry (X4) of said first ring
in which the inner and outer rings are mounted with freedom to pivot angularly (A1) about a point (C1) common to the axes of symmetry (X3, X4) of the two rings,
wherein the sealing gasket (10) has at least one auxiliary lip (108; 108, 108') extending from said wiper lip (106) and coming in sliding contact with said surface (324) of said second ring (3).

2. Ball bearing according to claim 1,
wherein
- said wiper lip (106) has an inner radial face (1062) and an outer radial face (1064), said inner radial face being oriented towards said surface (324) of said second ring (3) and
- said auxiliary lip (108; 108, 108') extends from said inner radial face (1062) of said wiper lip (106), towards said surface (324) of said second ring (3).

3. Ball bearing according to any preceding claim, wherein, in a cross section plane including the central axes (X3, X4) of said rings (3, 4),
- said wiper lip (106) extends, from a main part (107) of said sealing gasket (106), along a first direction (D6) which converges towards said rotation axes and said balls (6),
- said auxiliary lip (108; 108, 108') extends, from said wiper lip (106), along a second direction (D8; D8, D8') which converges towards said rotation axes opposite said balls.

4. Ball bearing according to any preceding claim,
wherein
- said auxiliary lip (108; 108, 108') has an inner radial face (1082) and an outer radial face (1084) and
- said faces converge opposite said wiper lip (106).

5. Ball bearing according to any proceding claim, wherein said auxiliary lip (108; 108, 108') is integral with said wiper lip (106).

6. Ball bearing according to one of claims 1 to 4, wherein said auxiliary lip (108; 108, 108') and said wiper lip (106) are made of two different elastomeric materials.

7. Ball bearing according to any proceding claims, wherein said gasket (10) has a core member (102) mounted on said first ring (4) and an elastomeric body (104) mounted on said core member and forming said wiper lip (106).

8. Ball bearing according to claims 5 and 7, wherein said wiper lip (106) and said auxiliary lip (108; 108, 108') are made by parts of said elastomeric body (104).

9. Ball bearing according to any preceding claim, wherein said sealing gasket (10) has one auxiliary lip (108).

10. Ball bearing according to one of claims 1 to 8, wherein said sealing gasket (10) has at least two auxiliary lips (108, 108') which extend, from said wiper lip (106), along parallel directions (D8, D8').

11. Ball bearing according to any preceding claim, wherein it comprises a shield (9) mounted on one (3) of said rings and forming, with a corresponding surface (44) of the other one (4) of said rings, a gap (G) of substantially constant width (W) during angular pivoting movement (A1) of said inner and outer rings (3,4) relative to each other.

12. Ball bearing according to claim 12, wherein said shield (9) and said sealing gasket (10) are located on opposite sides of said raceway chamber (5).

13. A clutch thrust bearing device comprising a drive element (2) and a bearing (1) according to any preceding claim.

14. Clutch thrust bearing device according to claim 13, wherein said sealing gasket (10) is mounted on a side of said bearing (1) which is opposite, with respect to said raceway chamber (5), to a part (8) of said clutch thrust bearing device which is configured to push on a diaphragm clutch mechanism (150).

15. A motor vehicle fitted with a bearing (1) according to one of claims 1 to 12 or with a clutch thrust bearing device (1, 2) according to one of claims 13 and 14.
